# EUROPEAN PATENT APPLICATION

(11) **EP 2 679 418 A1**
(43) Date of publication of application: **01.01.2014**
(21) Application number: 12173445.3
(22) Date of filing: 25.06.2012
(51) Int. Cl.: B60H 1/00

(54) **Method and arrangement for vehicle cabin conditioning, a corresponding computer program and a corresponding computer-readable storage**

(71) Applicant: Paraska Holdings Limited, 1082 Nicosia (CY)
(72) Inventor: The designation of the inventor has not yet been filed
(74) Representative: Gulde Hengelhaupt Ziebig & Schneider

(57) **Abstract**

The present invention concerns a method and an arrangement for vehicle cabin conditioning, a corresponding computer program and a corresponding computer-readable storage, which enable preconditioning of a cabin of a vehicle, especially of an electric or hybrid vehicle, without consuming fuel or electric energy from energy storages of the vehicle. Therefore, especially vehicle driving range is not reduced by conditioning.

For this purpose a method for vehicle cabin conditioning is proposed, wherein the method comprises at least the steps of:
providing at least
- a data processing unit,
- input means for inputting data into the data processing unit,
- a conditioning system;

activating the vehicle cabin conditioning by user input into the input means;
in response to activation calculating automatically by the data processing unit at least a time for starting the conditioning system for achieving at a pre-defined time presettable cabin conditions and
starting the conditioning system at the calculated time and/or providing an error information.

## Description

The present invention concerns a method and an arrangement for vehicle cabin conditioning, a corresponding computer program and a corresponding computer-readable storage, which enable preconditioning of a cabin of a vehicle, especially of an electric or hybrid vehicle, where electric energy stored in the vehicle is consumed according to conditions and limits set by a user.

Modern HVAC systems have an automatic setting, which is activated by the driver when in the vehicle. In extreme temperature environments, the HVAC system is controlled such that the set-point temperature can be reached in the shortest time possible. This feature however, cannot be activated remotely.

Operating HVAC systems in conventional internal combustion engine (ICE) vehicles increases the fuel consumption. Likewise in an electric vehicle (EV), the range can be dramatically reduced by the use of HVAC systems. In environments of extreme temperatures, the HVAC system is used intensely until the cabin environment is at a comfortable temperature, therefore reducing the range of the EV. Off-the-shelf HVAC systems only operate when the vehicle has been activated by the driver sitting in the vehicle, no remote access to operate the HVAC system is in place.

There are known additional cabin heaters. These devices are utilizing either fuel fired heater or AC powerd heaters. These are added on systems neither utilizing on board standard climate system nor are they capable of cooling.

Other electric vehicles have systems that allow the customer to send a request via SMS directly to their vehicle. These do not have the ability to set multiple events (e.g. weekday / weekend schedules) and have no ability to feed vehicle state directly back to the customer.

It is therefore an object of the invention to provide a method and an arrangement for vehicle cabin conditioning, a corresponding computer program and a corresponding computer-readable storage, which obviates the disadvantages of the conventional solutions, and which more particularly minimize consumption of electrical energy of a traction battery of the vehicle.

The object is solved with the invention by the features in claims 1, 9, 14 and 15. Advantageous embodiments of the invention are recited in the dependent claims.

The inventive method has the advantage that preconditioning can be achieved while the driving range of an electric vehicle is defined by a user. This is achieved by a method for vehicle cabin conditioning, where at least a data processing unit, input means for inputting data into the data processing unit and a conditioning system is provided and the vehicle cabin conditioning is activated by user input into the input means. In response to the user input a time for starting the conditioning system is calculated automatically by the data processing unit for achieving at a pre-defined time presettable cabin conditions. At least one of pre-defined time and presettable cabin conditions may be entered by the user input or stored in storage means of the data processing unit. At the point of time, which was calculated by the data processing unit, the conditioning system is started if some pre-defined conditions are met. In the case that at one or more of the pre-defined conditions are not met, status information is provided, where the status information may comprise error information. Therefore, the user receives feedback from the vehicle and/or data processing unit with information about the state of the preconditioning.

According to another aspect of the invention, an arrangement for vehicle cabin conditioning is provided, where the arrangement comprises at least a data processing unit, input means for inputting data into the data processing unit and a conditioning system. The arrangement is further configured for executing a method for vehicle cabin conditioning, where the vehicle cabin conditioning is activated by user input into the input means, in response to activation at least a time for starting the conditioning system for achieving at a pre-defined time presettable cabin conditions is calculated automatically by the data processing unit and the conditioning system is started at the calculated time and/or an status information is provided to the user.

According to another aspect of the invention, a computer program is provided, which enables a data processing unit to carry out in interaction with at least an input means for inputting data into the data processing unit and with at least a conditioning system a method for vehicle cabin conditioning, where the vehicle cabin conditioning is activated by user input into the input means, in response to activation at least a time for starting the conditioning system for achieving at a pre-defined time presettable cabin conditions is calculated automatically by the data processing unit and the conditioning system is started at the calculated time and/or an status information is provided to the user.

Such computer programs can be provided, for example, (fee-based or free of charge, freely accessible or password-protected) for downloading in a data or communication network. The provided computer programs can be used with a method, wherein a computer program according to claim 14 is downloaded from an electronic data network, for example from the Internet, to a data processing system connected to the data network.

It is another aspect of the invention to provide a computer-readable storage medium where a program is stored, which program enables a data processing unit to carry out in interaction with at least an input means for inputting data into the data processing unit and with at least a conditioning system a method for vehicle cabin conditioning, where the vehicle cabin conditioning is activated by user input into the input means, in response to activation at least a time for starting the conditioning system for achieving at a pre-defined time presettable cabin conditions is calculated automatically by the data processing unit and the conditioning system is started at the calculated time and/or an status information is provided to the user.

In a preferred embodiment of the invention at least one of the at least one data processing unit is arranged remote from the vehicle, therefore enabling remote activation of the vehicle cabin conditioning. Preferably the data processing unit is realized as a server. According to a preferred embodiment preset precondition times are stored on the data processing unit. Preferably precondition time may differ according to some criteria, e.g. weekday/weekend or summer/winter time.

According to another preferred embodiment of the invention the arrangement comprises further at least one of a climate control module and a remote acquisition unit (RAC). It has been found advantageously that at least one of the climate control module and the RAC is fitted to the vehicle. The RAC serves as communication interface to the remotely arranged data processing unit. In another preferred embodiment the arrangement comprises further a vehicle control unit (VCU). According to a preferred embodiment of the invention the RAC receives from the server a request for preconditioning. The request is then forwarded from the RAC to the VCU, which starts the vehicle cabin conditioning.

According to another preferred embodiment the server informs the RAC, which activate the climate control module. Communication between components arranged in the vehicle uses preferably the controller area network (CAN) of the vehicle.

In a further preferred embodiment of the invention the conditioning system is realized as a standard automotive heating ventilation and air conditioning system.

According to another preferred embodiment input means are provided by a stationary data processing unit, which comprises for example personal computer, and/or a mobile terminal such as mobile phone, smart phone, laptop personal digital assistant (PDA) or such. Input means comprise for example an application of a mobile terminal, a widget, a home page in a computer network and a message service in a cell phone network.

According to another preferred embodiment of the invention a state of charge (SOC) of an electrical energy storage of the vehicle, for example an SOC of a traction battery, is pre-defined, and electrical energy of the electrical energy storage for preconditioning is consumed only within the pre-defined limit. This approach prevents discharging of the electrical energy storage below the pre-defined SOC limit.

According to another preferred embodiment of the invention the time for starting the conditioning system is calculated, where contribution of influence quantities is included in calculation. Such influence quantities comprises for example ambient or cabin temperature, state of charge of the traction battery, data which is stored in lookup tables, user settings or such. In a further preferred embodiment the method comprises comparison between the time until the electrical energy storage is charged until a pre-defined SOC, preferably until the electrical energy storage is full charged, and the calculated time. With this feature it is prevented that the battery does decrease below a pre-defined SOC due to preconditioning in parallel to charging. Irrespective of whether the battery is connected to the grid or not, the battery has a charge higher than the minimum pre-defined by the user. The value can be 100 % of SOC or any value lower than 100 %, but higher than 20 %.

Another aspect of the present invention is providing electrical energy for preconditioning from a power source outside the vehicle, preferably from an electrical power network. It has been found advantageously to perform vehicle cabin conditioning while the battery of the vehicle is charged.

This invention provides an on-board electric vehicle cabin pre-conditioning (EVCPC) system, utilizing the standard climate system. The system is capable of controlling the air-conditioning and heater units for heating, cooling and ventilation of the cabin. The system provides the benefit of pre-cleared windows from ice and/or misting of internal surface as well as improved passenger comfort and vehicle range.

The feature can be activated by the user through a smart-phone application, widget, personal logon to a secure homepage on the internet or a cell phone communication (SMS) sent to a server. The user can select the timing and the temperature to which he wants the vehicle to be pre conditioned. The vehicle will automatically activate the cabin pre-conditioning to assure interior temperature is achieved.

The system will calculate the time needed to achieve the temperature setpoint based on the ambient temperature and the capacity of the heater/AirCon. Pre-conditioning will start at the calculated time providing that the vehicle is connected to the utility supply (grid). System is also prepared for closed loop control based on inside cabin temperature sensor allowing variable temperature setpoint control.

The novel features which the invention provides are:
- If an electrical power network is available, the EVCPC system does not use the energy of the traction battery but uses the energy that is available from the electrical power network. The key advantage of this type of system is that the driver is able to start their journey with a pre-conditioned cabin. This in turn minimises the use of the HVAC system and therefore increases the driving range of the EV. Battery state of charge (SOC) will not reduce as a result of pre-conditioning.
- If the vehicle is in charge but the battery has not reached full SOC, or if the vehicle is not connected to the grid for charging, the system activates preconditioning at the time preset by the user or as soon as the user sends a request. The inventive method and arrangement enables preconditioning with consuming electrical energy stored in the vehicle under conditions and within the limit of the minimumbattery SOC set by the user. The user can judge, for eample, that he needs only 70 % of battery charge to make the next trip and authorizes the remote control system to use the energy of the battery for preconditioning the vehicle until the battery charge goed down to 70 %. In such a situation preconditioning eill start according to the start instructions and will stop as soon as the minimum charge level has been reached.
- Feedback is provided to the user if conditions are not met to provide pre-conditioning. Invalid conditions that prevent pre-conditioning include no connection to an electrical power network; failed connection between the vehicle and the remote access server, or the HVAC system; incorrect operation of the HVAC unit.
- Feedback is also provided to the user if the battery will not be at 100% SOC at the requested time or if the requested temperature is unrealistic or if the requested temperature requires power from the electrical power network that causes a net discharge of the battery.

This invention will directly affect users of electric vehicles by maximising vehicle range without compromising driver comfort. Clearing windows and pre-conditioning of the cabin by taking the energy directly from the grid will maximize the drive range since the battery will not have to provide the energy for the initial heating, cooling, ventilation or defrost / demist functions.

Using the existing vehicle HVAC system reduces overall system cost, weight and complexity. Previous systems have been able to provide cabin pre-conditioning either by using additional electric heater units, on-board fuel fired heaters or utilising the standard heater running from stored battery energy. The first two systems add weight and require packaging within the vehicle, the latter will reduce available range.

This system enables remote heating, cooling and ventilation control through a smartphone application with vehicle state feedback and improved comfort without compromising vehicle range. Other systems do not offer these benefits without additional units or range reduction. No other systems have the ability to feed back to the user if preconditioning will affect battery state of charge during charging. The control system is spread between the smart phone application, server support, server to vehicle communication and vehicle internal system control. The overall system architecture is designed to be as vehicle-independent as possible as this is part of the <Think Global AS> overall control strategy so is portable with the Think powertrain control system.

Other features and advantages of the present invention will be more readily apparent upon reading the following description of currently preferred exemplified embodiments of the invention with reference to the accompanying drawing, in which:
- FIG. 1: shows a remote control of a HVAC system in an electric vehicle according to prior art,
- FIG. 2: shows an exemplary embodiment of an inventive remote control of a HVAC system,
- FIG. 3: shows an exemplary EVCPC,
- FIG. 4: shows a flow chart of an exemplary scheduling of pre-conditioning,
- FIG. 5: shows a flow chart of an exemplary programming of events in the vehicle,
- FIG. 6: shows a flow chart of an exemplary calculating of the pre-condition time,
- FIG. 7: shows a flow chart of an exemplary starting of scheduled events,
- FIG. 8: shows a flow chart of an exemplary user triggered start of the pre-condition,
- FIG. 9: shows a flow chart of an exemplary cancelling of the pre-conditioning process,
- FIG. 10: shows a diagram of pre-heat time over the ambient temperature and
- FIG. 11: shows a diagram of pre-vent time over the ambient temperature and
- FIG. 12: shows a diagram of pre-cool time over the ambient temperature.

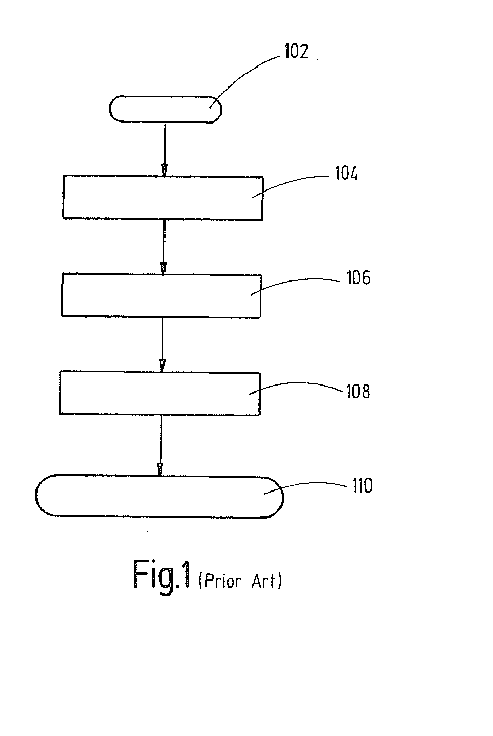

Prior to describe the invention in more detail, a remote control of a HVAC system in an electric vehicle according to prior art shall be explained with the help of figure 1.

The remote control starts in step 102. A user requests in step 104 operation of a vehicle heating or air conditioning system, which results in step 106 in operation of the HVAC system, which leads to consumption 108 of traction battery power. If cabin preconditioning is completed in step 110, traction battery energy is used or the traction battery is not fully charged, which leads to a reduced vehicle range.

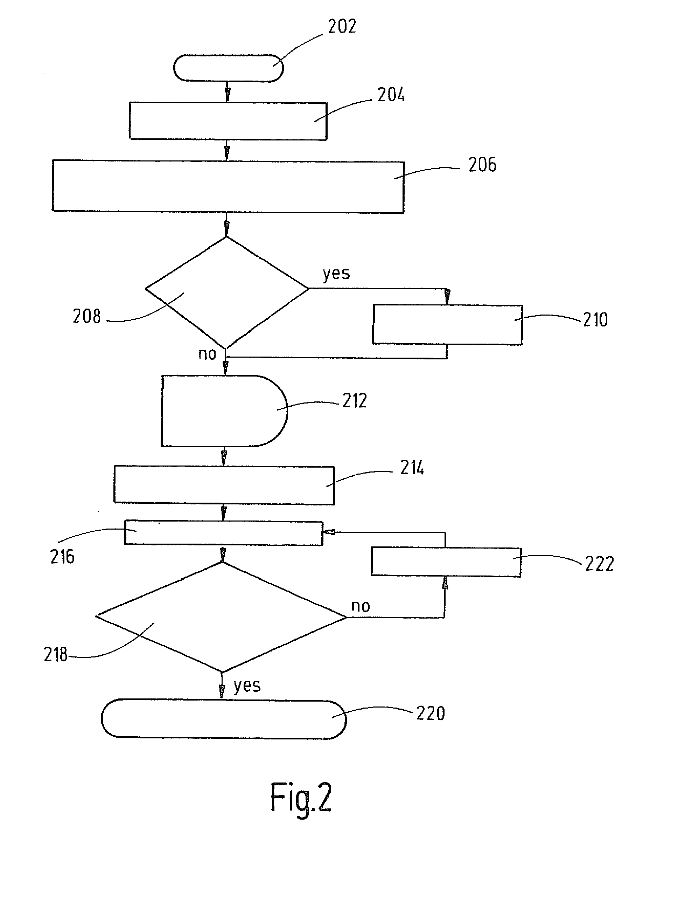

With the help of figure 2 an enhanced remote control of an HVAC 326 system in an electric vehicle 310 with system status feedback and load balancing is described. At the start in step 202 a user logs on to a server 302 with a cell phone 304 or with a laptop 306, which may be protected with an individual password. The user requests in step 204 vehicle heating or air conditioning system operation, for example by selecting preconditioning activation timing.

On the server 302 information about vehicle status and estimated time, i.e. date and time, until the traction battery 308 is fully charged may be available. This information may be obtained for example, by assessing in step 206 the system status. For this purpose and generally for obtaining information about vehicle status, server 302 establishes a communication link, preferably a wireless communication link, to the remote acquisition unit 312 (RAC). This may comprise estimating preconditioning time based on ambient temperature and estimating battery state of charge at requested 'finish' time. In a preferred embodiment, the time when the traction battery 308 is fully charged is equivalent to the time, when preconditioning first can be activated. In alternative embodiments, preconditioning may be used without fully charging the battery 308. For this purpose, in step 208, it is estimated whether the battery SOC is below a pre-defined threshold. This threshold may be set, as mentioned above, to 100 %, e.g. fully charged, or a value less than 100 %, for example a value between 70 % and 95 %, preferably a value between 80 % and 90 %. If it is estimated that the battery SOC is below the threshold, the user is informed. The purpose of this function is to inform the user about the battery charge and/or the vehicle range with and without preconditioning. In step 210 the user can decide whether the preconditioning is continued or whether the preconditioning request is cancelled based on the feedback from the server 302 since it may be more important to achieve maximum range than starting with a warm cabin.

The user may also set check and/or remind time which will trigger a vehicle status check, e.g. check whether the vehicle is on plug at 17:00 for precondition set time of 07:00.

Further, the server 302 may store a number of different preset preconditioning times, e.g. time for weekdays and time for weekend.

In the case, when the estimated battery SOC at the time of activating the preconditioning is equal the threshold or higher as the threshold, or if the user in step 210 has decided to continue with the preconditioning request, the system waits in step 212 until the estimated start time. In an exemplary embodiment of the invention, the server 302 sends information to the vehicle 310, especially to the RAC 312 of the vehicle 310, with a specified date and time corresponding to the maximum preconditioning time before the set point. In a preferred embodiment such information are sent less than four weeks before the first preconditioning set point to the vehicle 310.

At the time corresponding to the maximum preconditioning time before the set point the RAC 312 activates the climate control module 314 and transmits selected preconditioning timing, where the information is transferred preferably via the CAN bus 316 of the vehicle 310. The climate control module 314 activates the VCU 318, and the VCU 318 checks whether the vehicle 310 is connected to the grid 320. The VCU 318 further checks the battery SOC. The vehicle status is returned to the server 302.

In step 214 the system verifies whether the high voltage system and the traction battery charger are enabled. If the vehicle 310 is not connected to the grid, in a preferred embodiment the preconditioning request is cancelled. If the vehicle 310 is connected to the grid and HVDC supply is available, the VCU 318 estimates based on internal parameters the time until the battery 308 is fully charged. Subsequently, the estimated time is compared with the preconditioning timing set point. If the preconditioning timing set point is less than the estimated time until the battery 308 is fully charged and the estimated state of chare is not over both a system and the user specified minimum state of charge, a response is sent to at least one of the user and the server 302.

If the preconditioning timing set point is greater than the estimated time until the battery 308 is fully charged, no response is sent and the VCU 318 activates the power conversion unit 322 and the battery management system 324 (BMS) for charging.

After in step 214 it was confirmed that high voltage system and the traction battery 308 charger are enabled, the HVAC 326 is configured in step 216 with the parameters inputted by the user.

Next, in step 218 it is checked whether the current flows from the grid 320 to the battery 308, which means that the battery 308 is charging, or whether the current is zero, which means that the battery 308 is fully charged. If this condition is fulfilled, then preconditioning is executed (step 220). In an exemplary embodiment preconditioning runs concurrently with the normal battery charging algorithm. The battery charging system will operate all the time, as long as the vehicle 310 is connected to the utility supply and will regulate the AC mains current draw as appropriate.

If in step 218 it is verified that current flows away from the battery 308, HVAC parameter are changed in step 222, especially HVAC demands, such as temperature or such, are reduced.

At least during preconditioning system readiness is confirmed by monitoring CAN status information such as for example:
- health of the system, especially health of BMS, PCU and Charger,
- is charge enabled (BMS),
- Availability of mains power (PCU),
- is temperature sensor enabled (PCU CAN message),
- battery state of charge (BMS),
- estimated time until fully charged (VCU).

The preconditioning schedule may also be set in the vehicle 308 using a direct interface 328 without the server 302 interaction. In this case the same process is used however the schedule is already available in the vehicle modules.

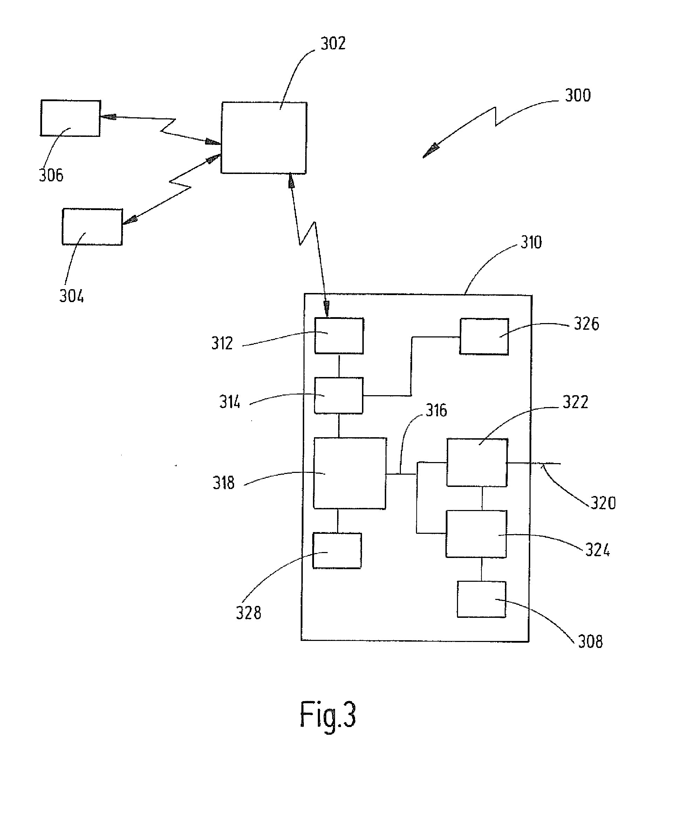

Interaction of the components according to an exemplary embodiment of the on-board electric vehicle cabin pre-conditioning (EVCPC) system 300 is depicted in Figure 3.

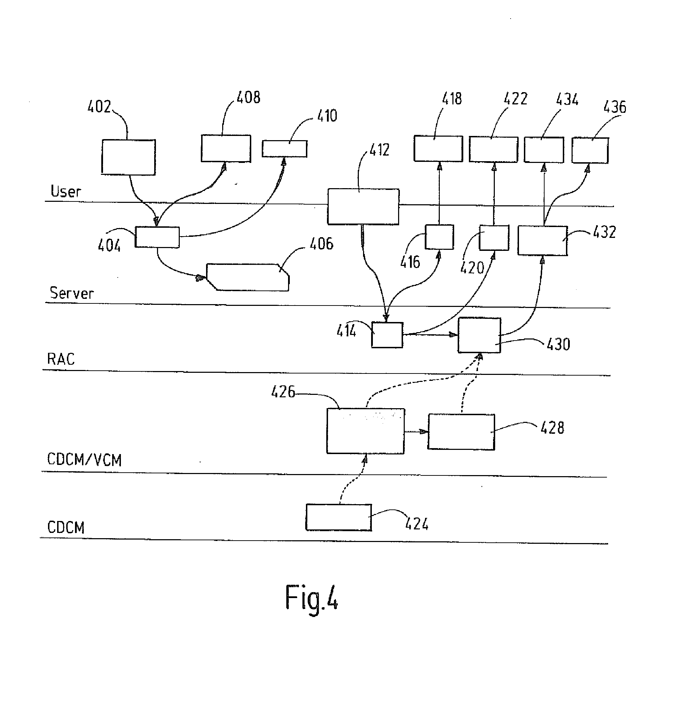

Figure 4 shows an exemplary scheduling of preconditioning. In step 402 a user put a new or a changed preconditioning request into input means of his phone 304 or laptop 306. In step 404 the request is checked by the server 302, and the new or a changed preconditioning request is stored on the server 302 in step 406. If an error occurs, such as for example malfunctioning connection to the server 302 or invalid request, it is signalled to the user with respecting error messages 408, 410.

Prior to start of the cabin pre-conditioning (EVCPC) system, the car preconditioning status is checked in step 412. For this purpose, the server 302 connects to the RAC 312. The RAC 312 verifies in step 414, whether the CAN 316 is running. In the case that a connection to the vehicle 310 can not be established, in step 416 the server diagnoses an connection error and send a message to the user in step 418 to warn that there is no connection to the vehicle 310. In the case that a connection to the vehicle 310 has been established, it is checked be the RAC 312 whether the CAN 316 is running. If it is detected that the CAN 316 is not running, the server 302 is informed about this in step 420, and the server 302 in turn informs the user in step 420.

If the RAC 312 found the CAN 316 running, the RAC 312 achieves preconditioning status and time from at least one of cabin demist and climate control module (CDCM) and VCU 318, where in an exemplary embodiment the climate settings 424 are stored in the CDCM. For evaluating the preconditioning status, in step 426 CDCM/VCM gather information, such as for example the climate settings 424 or whether the vehicle 310 is connected to the grid 320, and calculates in step 428 the preconditioning time. Preconditioning status and time is provided to the RAC 312 and relied in step 430 from the RAC 312 to the server 302, which in turn transmits to the user depending from the preconditioning status the message 434 that the vehicle is ready for preconditioning or a message 436 that preconditioning is not possible.

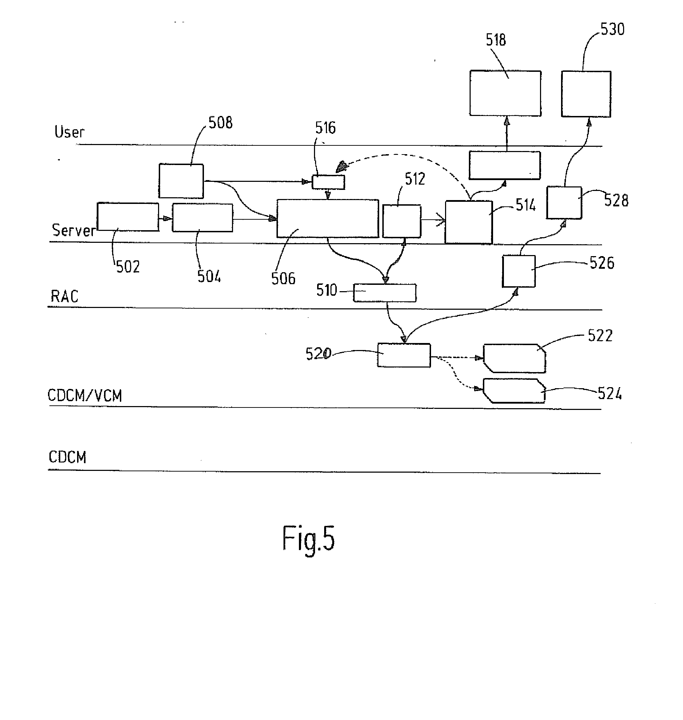

In figure 5 it is depicted a flow chart of an exemplary programming of events in the vehicle. In step 502 the server 302 decides whether a preconditioning request has been done or whether the time for executing a preconditioning request has been elapsed. If this is the case, the passed preconditioning request will be removed in step 504, and the server checks in step 506 whether there is an event within the next four weeks. If there is a new or a changed preconditioning request 508 stored on the server 302 in step 406, the server 302 establishes a connection to the RAC 312 for updating the RAC 312 by transmitting in step 510, at least preconditioning time and temperature to the RAC 312. In case, the Server 302 can not establish a connection to the RAC 312, the server determines in step 512 that there is no connection to the car 310 and waits in step 514 a pre-defined period of time until the server 302 retries connecting the RAC 312. In step 514, the server 302 also checks, whether an abort condition is met. An abort condition is met in an exemplary embodiment after a pre-defined number of unsuccessful attempts for establishing a connection to the car 310. If the abort condition is met, in step 516 the attempts for connecting are aborted. Furthermore, the server 302 informs the user in step 518 that an error has occurred with a message that there is no connection to the car 310 and preconditioning could not updated.

In the case that connection to the RAC 312 has been successfully established, in step 520, the event is stored in at least one of CDCM and VCU 318 and it is verified whether the time for starting preconditioning has been arrived. If the time has not been arrived, in step 522, a wake up time for preparing preconditioning is set; elsewise preparation of preconditioning is started in step 524. If the preconditioning request 508 is not accepted by the CDCM or VCU 318, in steps 526 and 528 a corresponding message 530 is transmitted to the user.

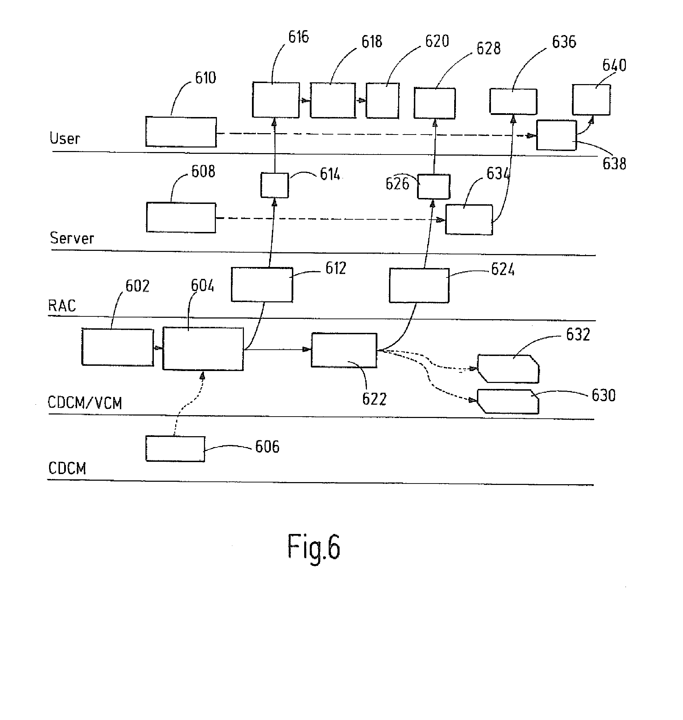

Figure 6 illustrates a flowchart of how the preconditioning system calculates the preconditioning time. In step 602 CDCM or VCU 318 starts preconditioning preparation and gathers in step 604 information for preconditioning ready status, which comprises for example accessing climate settings 606, which are stored in the CDVM, and verifying whether the car 310 is connected to the grid 320. From the point of time, when preconditioning preparation is started, server 302 and application on user's cell phone 304 or laptop 306 are waiting for status information or confirmation that preconditioning preparation has been started successfully (steps 608 and 610). CDCM or VCU 318 transmit preconditioning status to the RAC 312, which in step 612 forwards the preconditioning status to the server 302, which checks in step 614 whether the preconditioning status meet pre-defined conditions and informs the application on the phone 304 or laptop 306 of the user in step 616. If the server 302 recognizes in step 618 that the user's application is not connected to the server 302, the server 302 sends in step 620 a message, for example a message of a short messaging service [SMS], to the cell phone 304 or laptop 306 of the user.

In the case that the preconditioning status complies with pre-defined conditions, in step 622 the preconditioning time is calculated and transmitted to the RAC 312, which in step 624 forwards the preconditioning time to the server 302. Server 302 receives the preconditioning time in step 626 and informs in step 628 the user that the car 310 is ready for preconditioning. Further, after the preconditioning time is calculated in step 622, a wake up time for preconditioning is set in step 630, if the time has not been arrived; elsewise preconditioning is started in step 632.

If the server 302, which is waiting for information about preconditioning status and time, does not receive such an information until the preconditioning time or until a pre-defined period before the preconditioning time, it transmits in step 634 a corresponding message to the application, which is installed on the cell phone 304 or laptop 306 of the user, where the message is outputted in step 636. The message may inform the user that there is no connection to the RAC 312. Analogously, if the application, which is waiting for information about preconditioning status and time, does not receive such an information or an error message until the preconditioning time or until a pre-defined period before the preconditioning time, it will generate in step 638 and output in step 640 a corresponding message. The message may inform the user that there is no connection to the server 302.

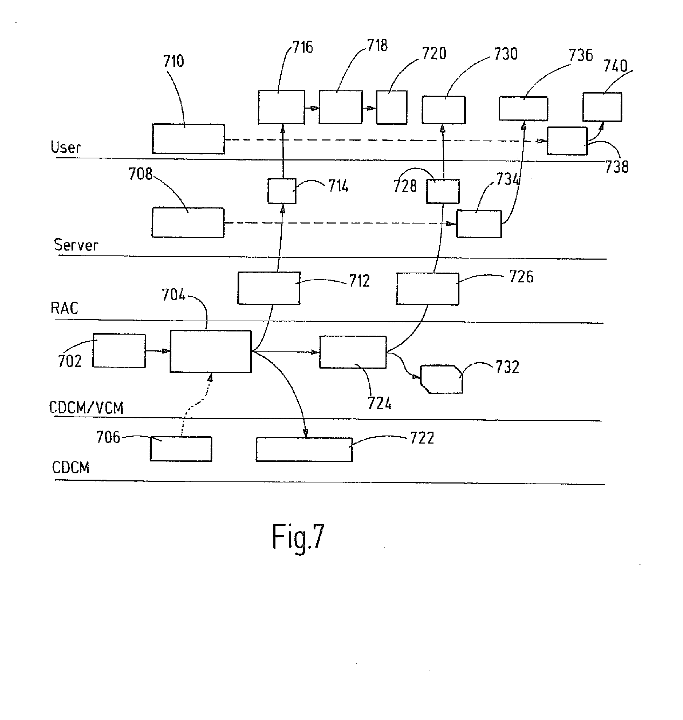

Figure 7 illustrates a flowchart of how the preconditioning system starts a scheduled event. In step 702 preconditioning is started by CDCM or VCU 318. After the start, information for preconditioning ready status, which comprises for example accessing climate settings 706, which are stored in the CDVM, is gathered in step 704. Further, it is checked in step 704, whether the car 310 is connected to the grid 320. From the point of time, when preconditioning is started, server 302 and application on user's cell phone 304 or laptop 306 are waiting for status information or confirmation that preconditioning has been started successfully (steps 708 and 710).

CDCM or VCU 318 transmit preconditioning status to the RAC 312, which in step 712 forwards the preconditioning status to the server 302, which checks in step 714 whether the preconditioning status meet pre-defined conditions and informs the application on the phone 304 or laptop 306 of the user in step 716. If the server 302 recognizes in step 718 that the user's application is not connected to the server 302, the server 302 sends in step 720 a message, for example a message of a short messaging service [SMS], to the cell phone 304 or laptop 306 of the user.

In the case that the preconditioning status complies with pre-defined conditions, preconditioning is started in step 722 by the CDCM. During preconditioning remaining preconditioning time is calculated in Step 724 and transmitted to the RAC 312, which in step 726 the remaining preconditioning time sends to the server 302. Server 302 generates in step 728 a message, which informs the user about the time when preconditioning is done. The message is transmitted to the cell phone 304 or laptop 306 of the user and outputted in step 730. If calculation in step 724 has as result that climate settings have been achieved, preconditioning is stopped in step 732.

If the server 302, which is waiting for information about start of preconditioning, does not receive such an information until the time, when climate settings shall be achieved, or until a pre-defined period before this time, it transmits in step 734 a corresponding message to the application, which is installed on the cell phone 304 or laptop 306 of the user, where the message is outputted in step 736. The message may inform the user that there is no connection to the RAC 312. Analogously, if the application, which is waiting for information about start of preconditioning, does not receive such an information or an error message from the server 302 until the time, when climate settings shall be achieved, or until a pre-defined period before the preconditioning time, it will generate in step 738 and output in step 740 a corresponding message. The message may inform the user that there is no connection to the server 302.

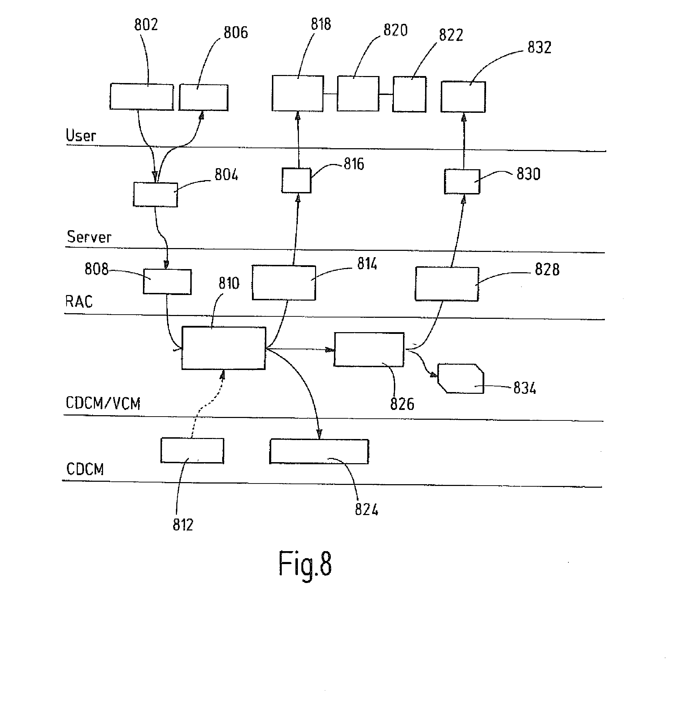

In figure 8 a flowchart is depicted which illustrates how the preconditioning system allows a user triggered start of preconditioning. In step 802 a user inputs into the application, which is installed on the cell phone 304 or laptop 306 of the user, a request that preconditioning (heating or cooling for example) shall start now. The request is transmitted to the server 302. If the application recognizes that the server 302 can not be accessed, in step 806 a corresponding message is outputted to the user. If the request is sent to the server 302, the request is forwarded to the RAC 312, where in step 808 preconditioning is started and at least one of CDCM and VCU 318 is informed accordingly. At CDCM or VCU 318, in step 810, information for preconditioning ready status is gathered, where the information comprises for example accessing climate settings 812, which are stored in the CDVM,. Further, it is checked in step 810, whether the car 310 is connected to the grid 320.

CDCM or VCU 318 transmit preconditioning status to the RAC 312, which in step 814 forwards the preconditioning status to the server 302, which checks in step 816 whether the preconditioning status meet pre-defined conditions and informs the application on the cell phone 304 or laptop 306 of the user in step 818. If the server 302 recognizes in step 820 that the user's application is not connected to the server 302, the server 302 sends in step 822 a message, for example a message of a short messaging service [SMS], to the cell phone 304 or laptop 306 of the user.

In the case that the preconditioning status complies with pre-defined conditions, preconditioning is started in step 824 by the CDCM. During preconditioning remaining preconditioning time is calculated in Step 826 and transmitted to the RAC 312, which in step 828 the remaining preconditioning time sends to the server 302. Server 302 generates in step 830 a message, which informs the user about the time when preconditioning is done. The message is transmitted to the cell phone 304 or laptop 306 of the user and outputted in step 832. If calculation in step 826 has as result that climate settings have been achieved, preconditioning is stopped in step 834.

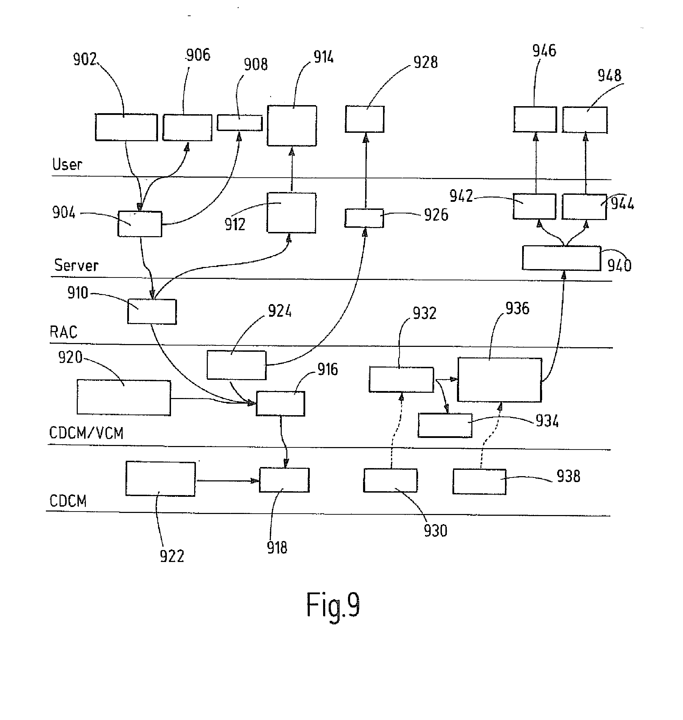

Figure 9 shoes a flowchart, which illustrates cancelling a preconditioning process by the user or caused by other events. In step 902 the user inputs an abort request into the application, which is installed on the cell phone 304 or laptop 306 of the user. The abort request is transmitted to the server 302. If the application recognizes that the server 302 can not be accessed, in step 906 a corresponding message is outputted to the user. At the server 302 the request is checked in step 904. If the request does not comply with pre-defined conditions, in step 906 a corresponding message is sent to the user and is outputted in step 908. If the conditions are met, the request is forwarded to the RAC 312, if the server has established a connection to the RAC 312. If the connection could not be established, server 302 generates a corresponding message in step 912and sends the message to the cell phone 304 or laptop 306 of the user, where the message is outputted instep 914. After the request has been sent to RAC 312, in step 910 stop of conditioning is initiated and at least one of CDCM and VCU 318 is informed accordingly. In turn, an instruction for stopping conditioning is generated in step 916 by CDCM or VCU 318. The instruction is sent to CDCM, where conditioning is stopped in step 918.

An instruction for stopping conditioning may also be generated in step 916 by CDCM or VCU 318, after a car error caused by user abort, such as for example separating the car 310 from the grid by removing the plug or turning ignition on, has been detected by CDCM or VCU 318 in step 920. Further, an instruction for stopping conditioning may be generated in step 916 by CDCM or VCU 318, after precondition has been stopped by timeout in step 924. Server 302 is in this case informed about timeout, and server recognizes in step 926 that precondition is done and informs the user by transmitting an according message, which is outputted on the cell phone 304 or laptop 306 in step 928. Conditioning is also stopped in step 918, when CDCM has detected a CDCM error caused by the user, for example after the user has changed climate settings, in step 922.

If the CDCM is in running status 930, preconditioning may also be stopped in step 932 without timeout. In this case, in step 934, potentially stored timeout information is deleted. In step 936 information for preconditioning ready status, which comprises for example accessing climate settings 938, which are stored in the CDVM, is gathered. The information is sent too the server 302, where in step 940 severity of abortion is evaluated. Depending from the result of the evaluation a message 942 is generated for informing the user that preconditioning has been aborted due to user instructions. The message is outputted in step 946. If evaluation leads to the result that preconditioning is stopped due to an error, a corresponding message is generated in step 944 and transmitted to the cell phone 304 or laptop 306 of the user, where the message is outputted in step 948.

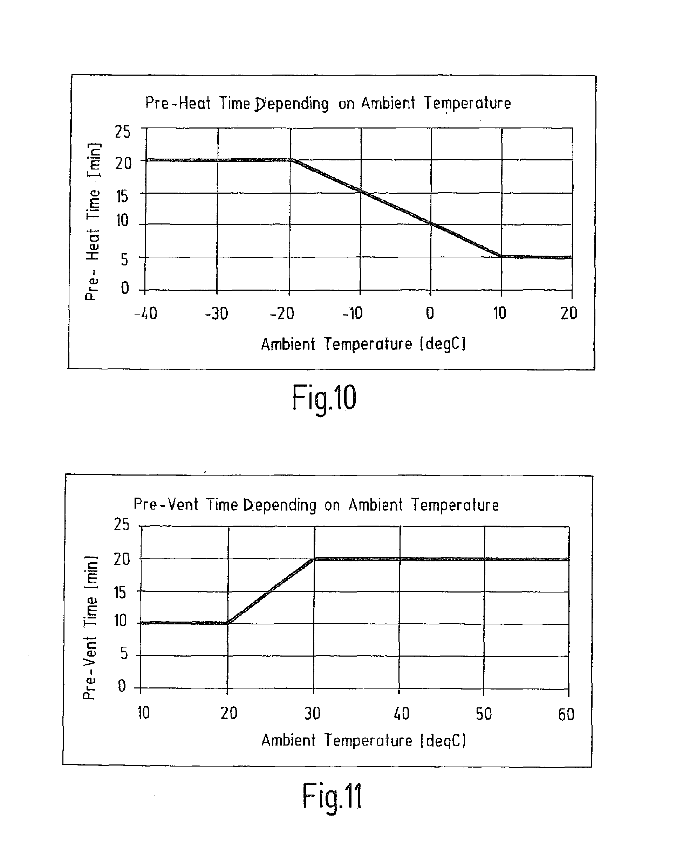

The pre-heat time can be set or calculated according to the ambient temperature or according to the cabin temperature. For example, it can be defined at least a maximum and a minimum pre-heat time, where the maximum pre-heat time is set for ambient or cabin temperatures below a presettable first temperature value and the minimum pre-heat time is set for ambient or cabin temperatures above a presettable second temperature value. Between the first and second temperature value the pre-heat time is set in linear dependence as illustrated in figure 10. According to a preferred embodiment the heater knob position is set to 90° and the blower is set to level 2, independent from the knob position. Preferably, the blower level for preconditioning is hard wired programmed.

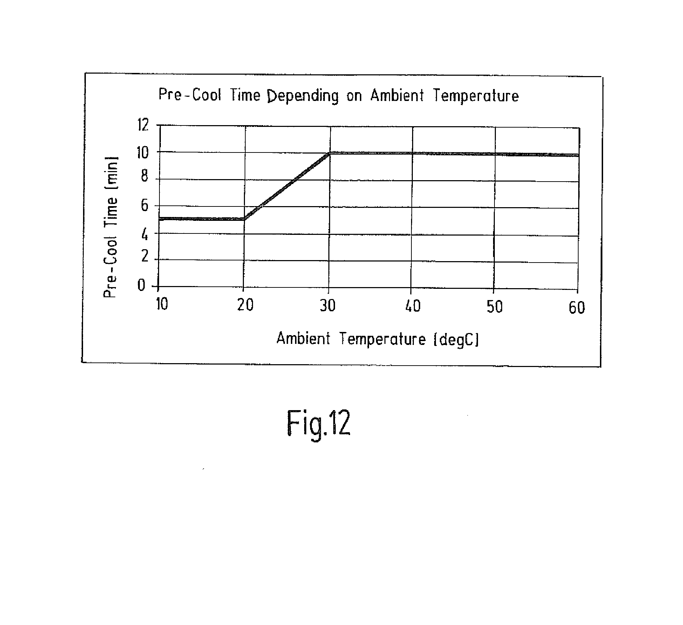

Analogously, pre-vent and/or pre-cool time can be set or calculated according to the ambient temperature or according to the cabin temperature. For example, it can be defined at least a maximum and a minimum pre-vent or pre-cool time, where the maximum pre-vent or pre-cool time is set for ambient or cabin temperatures above a presettable first temperature value and the minimum pre-vent or pre-cool time is set for ambient or cabin temperatures below a presettable second temperature value. Between the first and second temperature value the pre-cool time is set in linear dependence as illustrated in figures 11 and 12. According to a preferred embodiment, also for pre-ventilation and/or pre-cooling, the blower is set to level 2, independent from the knob position. Preferably, the blower level for preconditioning is hard wired programmed.

While the invention has been illustrated and described in connection with currently preferred embodiments shown and described in detail, it is not intended to be limited to the details shown since various modifications and structural changes may be made without departing in any way from the spirit of the present invention. The embodiments were chosen and described in order to best explain the principles of the invention and practical application to thereby enable a person skilled in the art to best utilize the invention and various embodiments with various modifications as are suited to the particular use contemplated.

### Glossary of abbreviations used in this document

- BMS:: Battery Management System
- CAN:: Controller Area Network - vehicle level communciation network
- CDCM:: Cabin Demist and Climate control Module - central module used to control air-conditioning, heater and fan states.
- EV:: Electric Vehicle
- EVCPC: Electric Vehicle Cabin Pre-Conditioning
- HEV:: Hybrid Electric Vehicle
- HVAC:: Heating Ventilation and Air Conditioning
- HVDC:: High Voltage Direct Current
- ICE:: internal combustion engine
- PCU:: Power Controller Unit - main module for high-voltage control, charging and traction
- RAC:: Remote Acquisition Unit - module fitted to vehicle that has integrated GSM or similar network communication
- SOC:: State Of Charge
- VCU / VCM:: Vehicle Control Unit / Vehicle Control Module - a module used for various vehicle interface and control functions

## Claims

1. A method for vehicle cabin conditioning, wherein the method comprises at least the steps of:
providing at least
- a data processing unit,
- input means for inputting data into the data processing unit,
- a conditioning system;
activating the vehicle cabin conditioning by user input into the input means;
in response to activation calculating automatically by the data processing unit at least a time for starting the conditioning system for achieving at a pre-defined time presettable cabin conditions and
starting the conditioning system at the calculated time and/or providing an error information.

2. The method according to claim 1, where the vehicle cabin conditioning is activated remotely.

3. The method according to claim 1 or 2, where calculating comprises evaluation of
- ambient temperature,
- state of an electrical energy storage of the vehicle,
- information from a lookup table,
- user settings.

4. The method according to one of the preceding claims, where calculating comprises estimation of the time until the electrical energy storage is charged to a pre-defined state of charge.

5. The method according to claim 4, where calculating further comprises comparison between an estimated state of charge at the calculated time and a pre-defined state of charge.

6. The method according to one of the preceding claims, where electrical energy provided from a power source outside the vehicle, preferably from an electrical power network, is used for the vehicle cabin conditioning.

7. The method according to one of the preceding claims, where providing an error information comprises at least one of
- information about the state of the electrical energy storage of the vehicle,
- information about whether the vehicle is connected to the electrical power network and
- information about a connection between the vehicle and the data processing unit and
- information about the state of the conditioning system.

8. The method according to one of the preceding claims, where the vehicle cabin conditioning is performed while the battery of the vehicle is charged.

9. An arrangement for vehicle cabin conditioning, the arrangement comprising at least
- a data processing unit,
- input means for inputting data into the data processing unit,
- a conditioning system;
the arrangement further being configured for executing a method for vehicle cabin conditioning according to one of the claims 1 to 8.

10. The arrangement according to claim 9, where the data processing unit is comprised in the vehicle or where the data processing unit is located remote from the vehicle.

11. The arrangement according to claim 9 or 10, where the conditioning system comprises an automotive heating, ventilation and air conditioning system.

12. The arrangement according to one of the claims 9 to 11, where the input means comprise at least
- an application of a mobile terminal,
- a widget,
- a home page in a computer network and
- a message service in a cell phone network.

13. The arrangement according to one of the claims 9 to 12, where the arrangement further comprises a vehicle control unit and a communication network, preferably a controller area network, for communication between at least the vehicle control unit and the conditioning system.

14. A computer program enabling a data processing unit to carry out in interaction with at least an input means for inputting data into the data processing unit and at least a conditioning system a method for vehicle cabin conditioning according to any one of claims 1 to 8 once it is loaded into storage means of the data processing unit.

15. A computer-readable storage medium where a program is stored, which program enables a data processing unit to carry out in interaction with at least an input means for inputting data into the data processing unit and at least a conditioning system a method for vehicle cabin conditioning according to any one of claims 1 to 8 once it is loaded into storage means of the data processing unit.
